# EUROPEAN PATENT APPLICATION

(11) **EP 3 951 657 A1**
(43) Date of publication of application: **09.02.2022**
(21) Application number: 20782689.2
(22) Date of filing: 17.03.2020
(51) Int. Cl.: G06K 19/06, G06Q 20/02, G06Q 20/08, G06Q 20/20, G06F 21/44, G06F 21/60

(54) **INFORMATION PROCESSING DEVICE, INFORMATION PROCESSING METHOD, PROGRAM, COMMUNICATION DEVICE, COMMUNICATION METHOD, AND INFORMATION PROCESSING SYSTEM**

(30) Priority: 29.03.2019 JP 2019068515
(71) Applicant: FeliCa Networks, Inc., Tokyo 141-0032 (JP)
(72) Inventor: WATANABE, Keitarou, Tokyo 141-0032 (JP)
(74) Representative: D Young & Co LLP
(86) International application number: PCT/JP2020/011602
(87) International publication number: WO 2020/203242

(57) **Abstract**

The present disclosure relates to an information processing apparatus, an information processing method, a program, a communication apparatus, a communication method, and an information processing system that enable provision of a technology capable of easily introducing a system that performs payment for service use.

Provided is an information processing apparatus including a control unit that generates a code to be read by a reading device on the basis of identification information of an IC chip of a communication apparatus upon receiving an instruction from the communication apparatus.

## Description

### TECHNICAL FIELD

The present disclosure relates to an information processing apparatus, an information processing method, a program, a communication apparatus, a communication method, and an information processing system.

### BACKGROUND ART

In recent years, a predetermined service management application that enables payment for use of a service (for example, electronic payment, coupon use, and the like) only by holding a mobile terminal over a reader has been known. Examples of the service management application include mobile payment (registered trademark). According to such a service management application, it is possible to easily pay a fee (see, for example, Patent Document 1).

### CITATION LIST

### PATENT DOCUMENT

Patent Document 1: Japanese Patent Application Laid-Open No. 2014-59855

### SUMMARY OF THE INVENTION

### PROBLEMS TO BE SOLVED BY THE INVENTION

However, in order to use such a service management application, a reader compatible with the service management application is required. A reader/writer compatible with a service management application has spread mainly in companies in urban areas and having a certain scale in an area. However, the reader compatible with the service management application has circumstances such as a high purchase price and difficulty in operation (for example, for a reason that highly confidential information needs to be managed, or the like). Therefore, the reader/writer compatible with the service management application is hardly introduced and spread in other areas.

Therefore, it is desirable to provide a technology capable of easily introducing a system that performs payment for service use.

### SOLUTIONS TO PROBLEMS

According to the present disclosure, there is provided an information processing apparatus including a control unit that generates a code to be read by a reading device on the basis of identification information of an IC chip of a communication apparatus upon receiving an instruction from the communication apparatus.

According to the present disclosure, there is provided an information processing method including acquiring identification information of an IC chip of a communication apparatus upon receiving an instruction from the communication apparatus, and generating a code to be read by a reading device on the basis of the identification information.

According to the present disclosure, there is provided a program for causing a computer to function as an information processing apparatus including a control unit that acquires identification information of an IC chip of a communication apparatus upon receiving an instruction from the communication apparatus, and generates a code to be read by a reading device on the basis of the identification information.

According to the present disclosure, there is provided a communication apparatus including a control unit that provides first identification information of an IC chip to an information processing apparatus, in which, in a case where a writing request to the IC chip is transmitted from the information processing apparatus, writing to the IC chip is not performed in a case where second identification information acquired from the IC chip does not match the first identification information.

According to the present disclosure, there is provided a communication method including providing first identification information of an IC chip to an information processing apparatus, and not performing writing to the IC chip in a case where second identification information designated by a writing request to the IC chip transmitted from the information processing apparatus does not match the first identification information.

According to the present disclosure, there is provided a program for causing a computer to function as a communication apparatus including a control unit that provides first identification information of an IC chip to an information processing apparatus, in which, in the control unit, writing to the IC chip is not performed in a case where second identification information designated by a writing request to the IC chip transmitted from the information processing apparatus does not match the first identification information.

### EFFECTS OF THE INVENTION

As described above, according to the present disclosure, provided is a technology capable of easily introducing a system that performs payment for service use. Note that the effect described above is not necessarily limitative, and any of the effects shown in the present specification or other effects that can be understood from the present specification may be exhibited together with the effect described above, or instead of the effect described above.

### BRIEF DESCRIPTION OF DRAWINGS

Fig. 1 is a diagram illustrating a configuration example of an information processing system according to an embodiment of the present disclosure.
Fig. 2 is a sequence diagram for explaining a mechanism of a general two-dimensional barcode payment.
Fig. 3 is a sequence diagram for explaining a mechanism of two-dimensional barcode payment according to the embodiment of the present disclosure.
Fig. 4 is a diagram illustrating a functional configuration example of a smartphone.
Fig. 5 is a diagram illustrating a functional configuration example of a reader.
Fig. 6 is a diagram illustrating a functional configuration example of a server.
Fig. 7 is a sequence diagram for explaining a first example of detailed functions of the information processing system according to the embodiment of the present disclosure.
Fig. 8 is a sequence diagram for explaining the first example of detailed functions of the information processing system according to the embodiment of the present disclosure.
Fig. 9 is a sequence diagram for explaining the first example of detailed functions of the information processing system according to the embodiment of the present disclosure.
Fig. 10 is a sequence diagram for explaining the first example of detailed functions of the information processing system according to the embodiment of the present disclosure.
Fig. 11 is a sequence diagram for explaining the first example of detailed functions of the information processing system according to the embodiment of the present disclosure.
Fig. 12 is a sequence diagram for explaining a second example of detailed functions of the information processing system according to the embodiment of the present disclosure.
Fig. 13 is a sequence diagram for explaining the second example of detailed functions of the information processing system according to the embodiment of the present disclosure.
Fig. 14 is a sequence diagram for explaining the second example of detailed functions of the information processing system according to the embodiment of the present disclosure.
Fig. 15 is a sequence diagram for explaining a third example of detailed functions of the information processing system according to the embodiment of the present disclosure.
Fig. 16 is a sequence diagram for explaining the third example of detailed functions of the information processing system according to the embodiment of the present disclosure.
Fig. 17 is a sequence diagram for explaining the third example of detailed functions of the information processing system according to the embodiment of the present disclosure.
Fig. 18 is a sequence diagram for explaining a fourth example of detailed functions of the information processing system according to the embodiment of the present disclosure.
Fig. 19 is a sequence diagram for explaining the fourth example of detailed functions of the information processing system according to the embodiment of the present disclosure.
Fig. 20 is a sequence diagram for explaining the fourth example of detailed functions of the information processing system according to the embodiment of the present disclosure.
Fig. 21 is a sequence diagram for explaining a fifth example of detailed functions of the information processing system according to the embodiment of the present disclosure.
Fig. 22 is a sequence diagram for explaining the fifth example of detailed functions of the information processing system according to the embodiment of the present disclosure.
Fig. 23 is a sequence diagram for explaining the fifth example of detailed functions of the information processing system according to the embodiment of the present disclosure.

### MODE FOR CARRYING OUT THE INVENTION

Preferred embodiments of the present disclosure will be described in detail below with reference to the accompanying drawings. Note that, in the present specification and the drawings, the same reference numerals are given to the constituent elements having substantially the same functional configuration, and redundant explanations are omitted.

Furthermore, in this specification and the drawings, a plurality of constituent elements having substantially the same or similar functional configuration may be distinguished by attaching different numerals after the same reference numerals. However, in a case where it is not necessary to particularly distinguish each of a plurality of constituent elements having substantially the same or similar functional configuration, only the same reference numerals are attached. Furthermore, similar constituent elements of different embodiments may be distinguished by adding different alphabets after the same reference numerals. However, in a case where it is not necessary to particularly distinguish each of similar constituent elements, only the same reference numerals are attached.

Note that the description will be given in the following order.
1. Overview
2. Details of embodiments
   2.1. System configuration example
   2.2. Sequence of comparative example and present embodiment
   2.3. Functional configuration example of smartphone
   2.4. Functional configuration example of reader
   2.5. Functional configuration example of server
3. Detailed functions of system
   3.1. First example
   3.2. Second example
   3.3. Third example
   3.4. Fourth example
   3.5. Fifth example
4. Conclusion
5. Modification

### <1. Overview>

First, an overview of an embodiment of the present disclosure will be described. In recent years, a predetermined service management application that enables payment for use of a service (for example, electronic payment, coupon use, and the like) only by holding a mobile terminal over a reader has been known. Examples of the service management application include mobile payment (registered trademark). According to such a service management application, it is possible to easily pay a fee.

However, in order to use such a service management application, a reader compatible with the service management application is required. A reader/writer compatible with a service management application has spread mainly in companies in urban areas and having a certain scale in an area. However, the reader compatible with the service management application has circumstances such as a high purchase price and difficulty in operation (for example, for a reason that highly confidential information needs to be managed, or the like). Therefore, the reader/writer compatible with the service management application is hardly introduced, and thus hardly spread in other areas.

Therefore, in the embodiment of the present disclosure, a technology capable of easily introducing a system that performs payment for service use will be mainly described. Specifically, there is a circumstance that a payment system using a code (for example, a one-dimensional barcode or a two-dimensional barcode) is easy to be introduced and thus easy to spread. Therefore, in the embodiment of the present disclosure, a value stored in an integrated circuit (IC) chip of a mobile terminal (communication apparatus) is used via a two-dimensional barcode. As a result, it is easy to introduce a system that performs payment for service use. Hereinafter, description will be given using a two-dimensional barcode as an example of a code. Examples of two-dimensional barcodes include QR codes (registered trademark). However, the type of code is not limited to the two-dimensional barcode. Furthermore, the IC chip may be a secure element (SE).

Note that the value is information necessary for providing a service to the user. For example, in a case where a credit card is used as the card, identification information associated with a credit card number may correspond to the value. Alternatively, in a case where a prepaid card is used as the card, a remaining amount (balance) that can be paid corresponds to the value.

The service provision to the user is preferably performed after the validity of the storage location of the value is secured and the validity of the user who accesses the value is secured. Validity of the storage location of the value can be secured by successful card authentication (for example, authentication by which validity of identification information specifying each IC chip can be confirmed, or the like). The identification information specifying each IC chip is unique identification information recorded in the IC chip at the time of manufacturing the card. On the other hand, validity of the user who accesses the value can be secured by successful user authentication (for example, authentication by a password, authentication by biometric information, or the like).

The overview of the embodiment of the present disclosure has been described above.

### <2. Details of embodiment>

Hereinafter, details of the embodiment of the present disclosure will be described.

### [2.1. System configuration example]

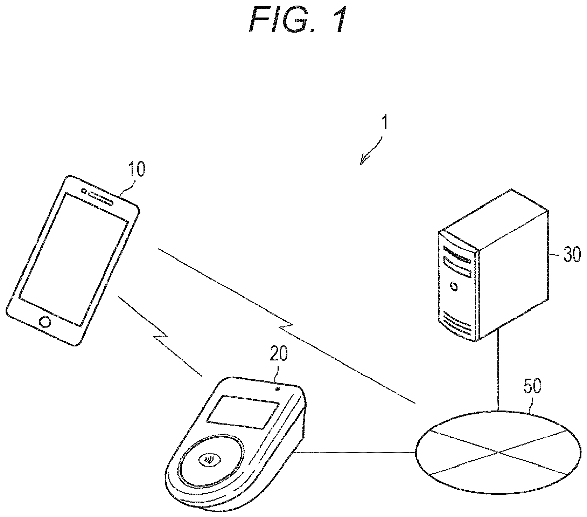

First, a configuration example of an information processing system according to the embodiment of the present disclosure will be described. Fig. 1 is a diagram illustrating the configuration example of the information processing system according to the embodiment of the present disclosure. As illustrated in Fig. 1, an information processing system 1 according to the embodiment of the present disclosure includes a smartphone 10, a reader 20, a server 30, and a network 50. The reader 20 and the server 30 are each connected to the network 50. For example, the network 50 may include the Internet, but the type of the network 50 is not limited.

The smartphone 10 is a mobile terminal used by a user. The smartphone 10 has a display, and in a case where a two-dimensional barcode is displayed by the display, the two-dimensional barcode is read by the reader 20. In the embodiment of the present disclosure, a case where the smartphone 10 is used as an example of the mobile terminal is mainly assumed. However, another mobile terminal may be used instead of the smartphone 10. For example, instead of the smartphone 10, a mobile phone may be used, a tablet terminal may be used, or a camera may be used. Note that the smartphone 10 can function as an example of a communication apparatus.

The reader 20 is a reading device installed in a store or the like. The reader 20 includes a reading unit, and in a case where a two-dimensional barcode is displayed on the display of the smartphone 10, the two-dimensional barcode is read by the reading unit. Furthermore, the reader 20 includes a display, and in a case where a two-dimensional barcode is displayed by the display, the two-dimensional barcode is read by the smartphone 10. The reader 20 that displays the two-dimensional barcode may be connected to a point of sale system (POS) terminal. Note that, in the example illustrated in Fig. 1, the reader 20 is directly connected to the network 50, but the reader 20 may be connected to the network 50 via a point of sale system (POS) terminal.

The server 30 is configured by a computer, and provides various responses to the smartphone 10 in response to a request (instruction) from the smartphone 10. As will be described later, the server 30 has a function as a payment system that manages payment and a function as a FeliCa server that performs communication with the IC chip of the smartphone 10. Hereinafter, a case where the payment system and the FeliCa server exist in the same server 30 will be mainly assumed. However, the payment system and the FeliCa server may exist separately in separate servers. Note that the server 30 can function as an example of the information processing apparatus.

The configuration example of the information processing system 1 according to an embodiment of the present disclosure has been described above.

### [2.2. Sequence of comparative example and present embodiment]

Next, the mechanism of the two-dimensional barcode payment of each of the comparative example and the present embodiment will be described.

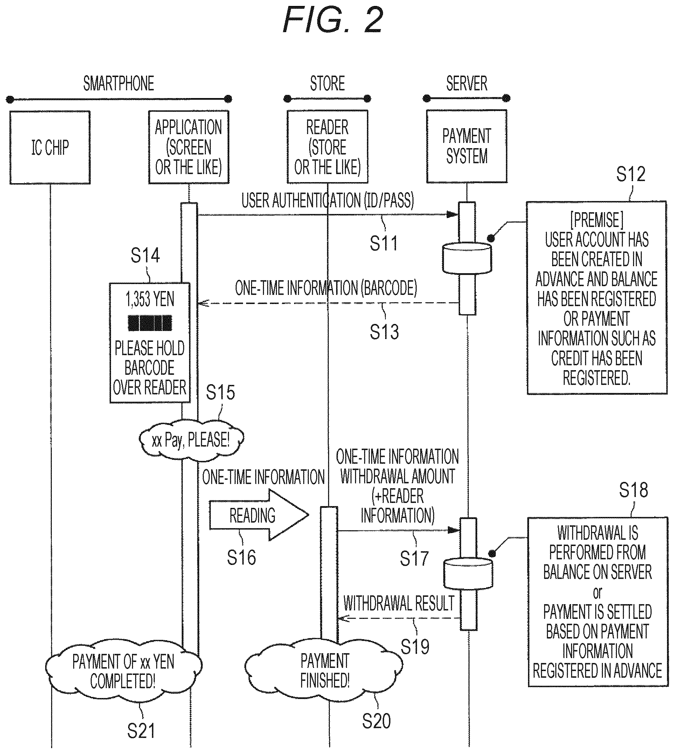

Fig. 2 is a sequence diagram for explaining a mechanism of a general two-dimensional barcode payment. As illustrated in Fig. 2, the smartphone includes an IC chip and an application (service management application), the store includes a reader, and the server includes a payment system. In the present example, the value described above is managed in advance in the payment system.

First, the application provides a user authentication request (including a user ID and a password) to the payment system (S11). In the payment system, a user account is created in advance and a balance is registered (or payment information such as a credit is registered) (S12). The payment system acquires a balance corresponding to the user ID, generates one-time information including a code such as a barcode, and provides the balance and the one-time information to the application (S13) .

Upon receiving the balance and the one-time information, the application displays the balance (in Fig. 2, 1353 yen) and displays a code (in Fig. 2, a barcode) corresponding to the one-time information (S14). When the user tells a service (S15), the reader in the store reads the code displayed by the application (S16), and provides the one-time information corresponding to the code, the withdrawal amount, the reader information (for example, the identification information of the reader), the service identification information, and the like to the payment system (S17).

The payment system withdraws the withdrawal amount from the balance (corresponding to the service) of the user managed in the server (or makes payment from pre-registered payment information) on the basis of the one-time information, the withdrawal amount, and the service identification information, and returns a withdrawal result to the reader of the store on the basis of the reader information (S19). Upon receiving the withdrawal result, the reader of the store notifies the store clerk that the payment has been completed on the basis of the withdrawal result (S20). Furthermore, the application notifies the user of the payment amount and that the payment has been completed (S21).

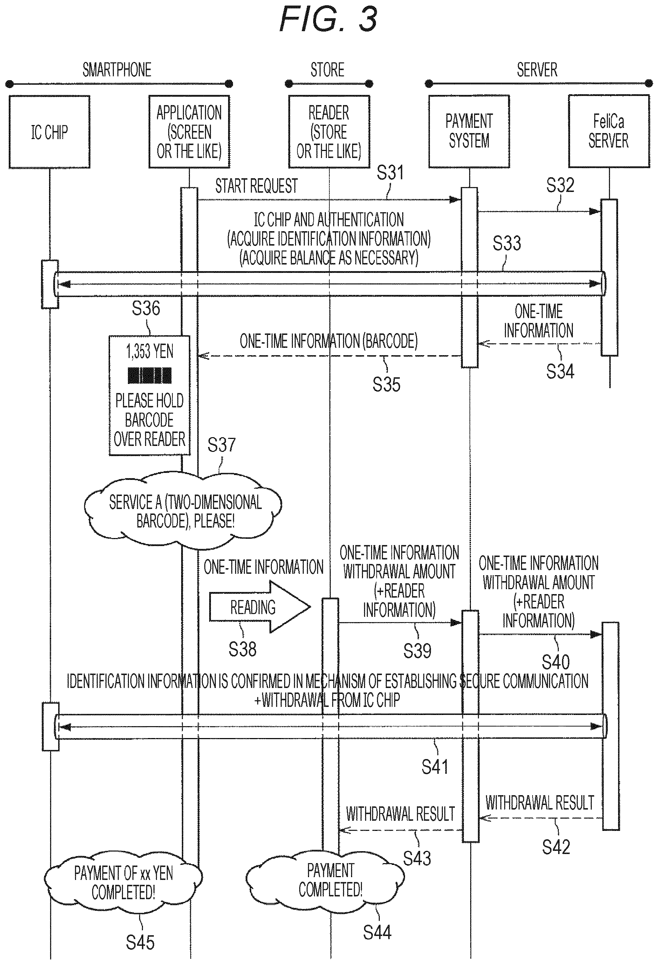

Fig. 3 is a sequence diagram for explaining a mechanism of two-dimensional barcode payment according to the embodiment of the present disclosure. As illustrated in Fig. 3 (as similar to the comparative example illustrated in Fig. 2), the smartphone includes an IC chip and an application, and the store includes a reader. On the other hand, in the embodiment of the present disclosure, the server includes a payment system and a FeliCa server. In the embodiment of the present disclosure, the value described above is managed in advance in the IC chip. The direction of communication between the smartphone and the server and the direction of communication between the reader and the server are not limited.

First, the application provides a start request to the payment system (S31). Upon receiving the start request, the payment system transfers the start request to the FeliCa server (S32). Upon receiving the start request, the FeliCa server authenticates the IC chip of the smartphone, and acquires identification information specifying the IC chip from the IC chip (S33). Such authentication is securely executed by mutual authentication using confidential information (for example, a key) held by the IC chip and confidential information (for example, a key) held by the FeliCa server. At this time, the FeliCa server also acquires the balance from the IC chip as necessary.

The FeliCa server generates one-time information corresponding to a code such as a barcode and provides the one-time information to the payment system (S35). The payment system provides the one-time information received from the FeliCa server to the application (S35). However, the payment system may generate the one-time information without the FeliCa server generating the one-time information.

Upon receiving the one-time information, the application displays the balance (in Fig. 3, 1353 yen) acquired from the IC chip and displays a code (in Fig. 3, a barcode) corresponding to the one-time information (S36). When the user tells a payment by the application (S37), the reader in the store reads the code displayed by the application (S38), and provides the one-time information corresponding to the code, the withdrawal amount, the reader information (for example, the identification information of the reader), and the like to the payment system (S39). The payment system transfers the one-time information, the withdrawal amount, the reader information, and the like to the FeliCa server (S40).

Upon receiving the one-time information, the FeliCa server acquires identification information specifying the IC chip from the IC chip of the smartphone, and performs withdrawal from the IC chip (S41).

At this time, a case is also assumed where, for example, a third party illegally copies a code displayed by a smartphone of a valid user to another smartphone. In such a case, there is a possibility that the code is held over the reader by the smartphone of the third party, and the payment information of a valid user is illegally used by the third party. Alternatively, there is a possibility that a session ID issued by a valid user is illegally acquired by a third party, and payment information of the valid user is illegally used by the third party.

Therefore, in order to prevent illegal use of the payment information of a valid user by a third party, the FeliCa server preferably more reliably acquires the identification information specifying the IC chip from the IC chip by a mechanism for establishing secure communication (prevention of forgery and impersonation by authentication, encryption for preventing eavesdropping of communication data, and the like) between the IC chip and the outside (for example, a server) provided by the IC chip. It is preferable that such authentication is securely executed by mutual authentication using confidential information (for example, a key) held by the IC chip and confidential information (for example, a key) held by the FeliCa server.

Moreover, in order to prevent illegal use of the payment information of a valid user by a third party, the FeliCa server determines whether or not the identification information specifying the IC chip used for code generation matches the identification information specifying the IC chip of the smartphone holding the code over the reader. Then, the FeliCa server withdraws the withdrawal amount from the IC chip in a case where pieces of identification information specifying both the IC chips match.

Then, the FeliCa server returns the withdrawal result to the reader of the store (via the payment system) on the basis of the reader information (S42, S43). Upon receiving the withdrawal result, the reader of the store notifies the store clerk that the payment has been completed on the basis of the withdrawal result (S44). Furthermore, the application notifies the user of the payment amount and that the payment has been completed (S45).

The mechanism of the two-dimensional barcode payment of each of the comparative example and the present embodiment has been described above.

### [2.3. Functional configuration example of smartphone]

Next, a functional configuration example of the smartphone 10 will be described.

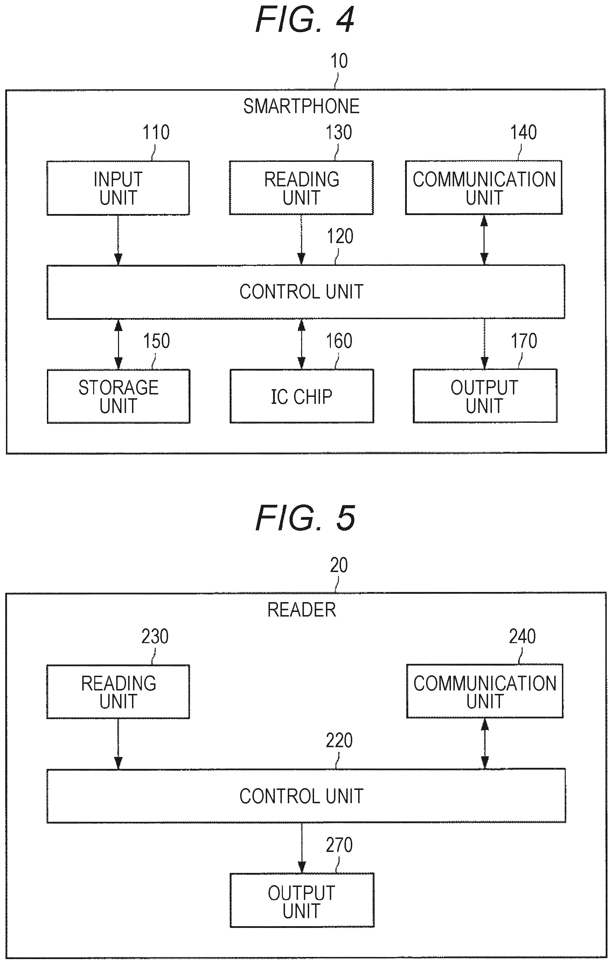

Fig. 4 is a diagram illustrating a functional configuration example of the smartphone 10. As illustrated in Fig. 4, the smartphone 10 includes an input unit 110, a control unit 120, a reading unit 130, a communication unit 140, a storage unit 150, an IC chip 160, and an output unit 170. Hereinafter, these functional blocks included in the smartphone 10 will be described.

The input unit 110 has a function of receiving an operation input by the user. In the embodiment of the present disclosure, a case where the input unit 110 includes a touch panel is mainly assumed. However, the input unit 110 may include a mouse, a keyboard, a button, a switch, a lever, or the like. Furthermore, the input unit 110 may include a microphone that detects the user's voice.

The control unit 120 may be configured by, for example, a processing apparatus such as one or a plurality of central processing units (CPUs). In a case where these blocks are configured by a processing apparatus such as a CPU, the processing apparatus may be configured by an electronic circuit. The control unit 120 can be implemented by executing a program by such a processing apparatus.

The reading unit 130 reads a two-dimensional barcode by imaging the two-dimensional barcode as an example of the code. In the embodiment of the present disclosure, a case is mainly assumed where the reading unit 130 includes an image sensor, and image data reads a two-dimensional barcode by imaging the two-dimensional barcode. Here, the type of the image sensor is not limited. For example, the image sensor may be a visible light sensor or an infrared sensor.

The communication unit 140 includes a communication circuit and has a function of communicating with another device via a network. For example, the communication unit 140 has a function of acquiring data from the another device and providing data to the another device. For example, the communication unit 140 is configured by a communication interface.

The storage unit 150 includes a memory, and is a recording medium that stores a program executed by the control unit 120 and stores data necessary for executing the program. The program may include the application described above. Furthermore, the storage unit 150 temporarily stores data for operation by the control unit 120. For example, the storage unit 150 includes a magnetic storage unit device, a semiconductor storage device, an optical storage device, or a magnetooptical storage device.

Identification information (identification information specifying the IC chip) unique is recorded in the IC chip 160 at the time of manufacturing the card. Furthermore, as described above, the value is recorded in the IC chip 160. The identification information specifying the IC chip and the value are acquired by the FeliCa server. Furthermore, the value is updated by the FeliCa server. As described above, the IC chip 160 holds confidential information (for example, a key) and is used for authentication by the FeliCa server.

The output unit 170 outputs various types of information. For example, the output unit 170 may include a display capable of performing display visible to the user. At this time, the display may be a liquid crystal display or an organic electro-luminescence (EL) display. Alternatively, the output unit 170 may be a light such as a light-emitting diode (LED).

Note that, in the embodiment of the present disclosure, a case where the input unit 110, the reading unit 130, the communication unit 140, the storage unit 150, the IC chip 160, and the output unit 170 exist inside the smartphone 10 is mainly assumed. However, at least one of the input unit 110, the reading unit 130, the communication unit 140, the storage unit 150, the IC chip 160, and the output unit 170 may exist outside the smartphone 10.

The functional configuration example of the smartphone 10 according to the embodiment of the present disclosure has been described above.

### [2.4. Functional configuration example of reader]

Next, a functional configuration example of the reader 20 will be described.

Fig. 5 is a diagram illustrating a functional configuration example of the reader 20. As illustrated in Fig. 5, the reader 20 includes a control unit 220, a reading unit 230, a communication unit 240, and an output unit 270. Hereinafter, these functional blocks included in the reader 20 will be described.

The control unit 220 may be configured by, for example, a processing apparatus such as one or a plurality of central processing units (CPUs). In a case where these blocks are configured by a processing apparatus such as a CPU, the processing apparatus may be configured by an electronic circuit. The control unit 220 can be implemented by executing a program by such a processing apparatus.

The reading unit 230 reads a two-dimensional barcode by imaging the two-dimensional barcode as an example of the code. In the embodiment of the present disclosure, a case is mainly assumed where the reading unit 230 includes an image sensor, and image data reads a two-dimensional barcode by imaging the two-dimensional barcode. Here, the type of the image sensor is not limited. For example, the image sensor may be a visible light sensor or an infrared sensor.

The communication unit 240 includes a communication circuit and has a function of communicating with another device via a network. For example, the communication unit 240 has a function of acquiring data from the another device and providing data to the another device. For example, the communication unit 240 is configured by a communication interface.

The output unit 270 outputs various types of information. For example, the output unit 270 may include a display capable of performing display visible to the user. At this time, the display may be a liquid crystal display or an organic electro-luminescence (EL) display. Alternatively, the output unit 170 may be a light such as a light-emitting diode (LED).

Note that, in the embodiment of the present disclosure, a case where the reading unit 230, the communication unit 240, and the output unit 270 exist inside the reader 20 is mainly assumed. However, at least one of the reading unit 230, the communication unit 240, and the output unit 270 may exist outside the reader 20 (for example, a POS terminal connected to the reader 20, or the like).

The functional configuration example of the reader 20 according to the embodiment of the present disclosure has been described above.

### [2.5. Functional configuration example of server]

Next, a functional configuration example of the server 30 will be described. As described above, the server 30 has a function as a payment system that manages payment and a function as a FeliCa server that performs communication with the IC chip of the smartphone 10.

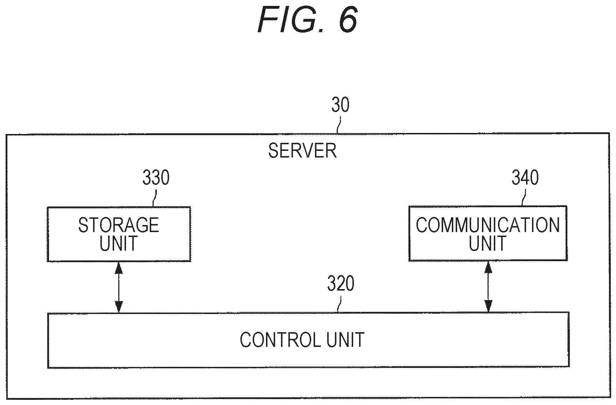

Fig. 6 is a diagram illustrating a functional configuration example of the server 30. As illustrated in Fig. 6, the server 30 includes a control unit 320, a storage unit 330, and a communication unit 340. Hereinafter, these functional blocks included in the server 30 will be described.

The control unit 320 may be configured by, for example, a processing apparatus such as one or a plurality of central processing units (CPUs). In a case where these blocks are configured by a processing apparatus such as a CPU, the processing apparatus may be configured by an electronic circuit. The control unit 320 can be implemented by executing a program by such a processing apparatus.

The storage unit 330 includes a memory, and is a recording medium that stores a program executed by the control unit 320 and stores data necessary for executing the program. Furthermore, the storage unit 330 temporarily stores data for operation by the control unit 320. For example, the storage unit 330 includes a magnetic storage unit device, a semiconductor storage device, an optical storage device, or a magnetooptical storage device.

The communication unit 340 includes a communication circuit and has a function of communicating with another device via a network. For example, the communication unit 340 has a function of acquiring data from the another device and providing data to the another device. For example, the communication unit 340 is configured by a communication interface.

Note that, in the embodiment of the present disclosure, a case where the storage unit 330 and the communication unit 340 exist inside the server 30 is mainly assumed. However, at least one of the storage unit 330 and the communication unit 340 may exist outside the server 30.

The functional configuration example of the server 30 according to the embodiment of the present disclosure has been described above.

### <3. Detailed functions of system>

Detailed functions of the information processing system 1 according to the embodiment of the present disclosure will be described below.

### [3.1. First example]

First, a first example of detailed functions of the information processing system 1 according to the embodiment of the present disclosure will be described. The first example is an example corresponding to a case where a two-dimensional barcode is displayed by the smartphone 10 and read by the reader 20 of the store and a case where the communication method between the smartphone 10 and the server 30 is a pull type (method in which the smartphone 10 transmits a request to the server 30, and the server 30 returns a result to the smartphone 10).

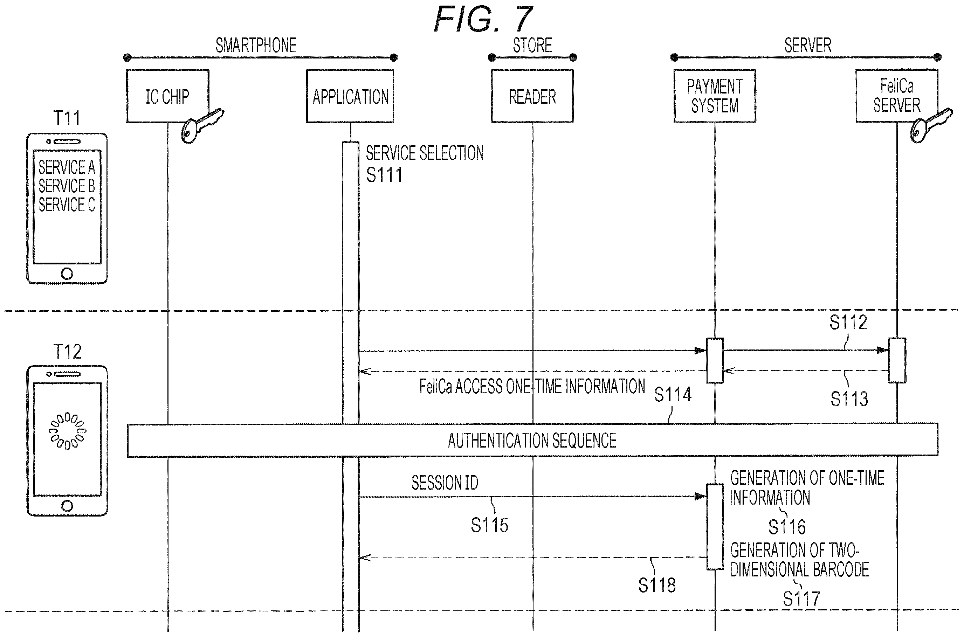

Figs. 7 to 11 are sequence diagrams for explaining the first example of detailed functions of the information processing system 1 according to the embodiment of the present disclosure. Here, a case is assumed where a user carrying the smartphone 10 visits a store and decides an item to be purchased.

In the smartphone 10, identification information (first identification information) specifying the IC chip is recorded in the IC chip 160, and a balance is recorded for each identification information (service identification information) of a service available by the user. When the application is started on the basis of the start operation by the user, the control unit 120 acquires the service identification information, generates a service selection screen including the acquired service identification information, and controls the output unit 170 to display the service selection screen (T11). Referring to T11, services A to C are displayed as an example of the service identification information. However, the number of pieces of service identification information is not limited.

When the input unit 110 accepts the selection of the service identification information by the user (S111), the control unit 120 provides an authentication request to the server 30 (the payment system and the FeliCa server) via the communication unit 140 (S112). Upon receiving the authentication request, the FeliCa server generates FeliCa access one-time information and provides the generated FeliCa access one-time information to the application (control unit 120) of the smartphone 10 (S113).

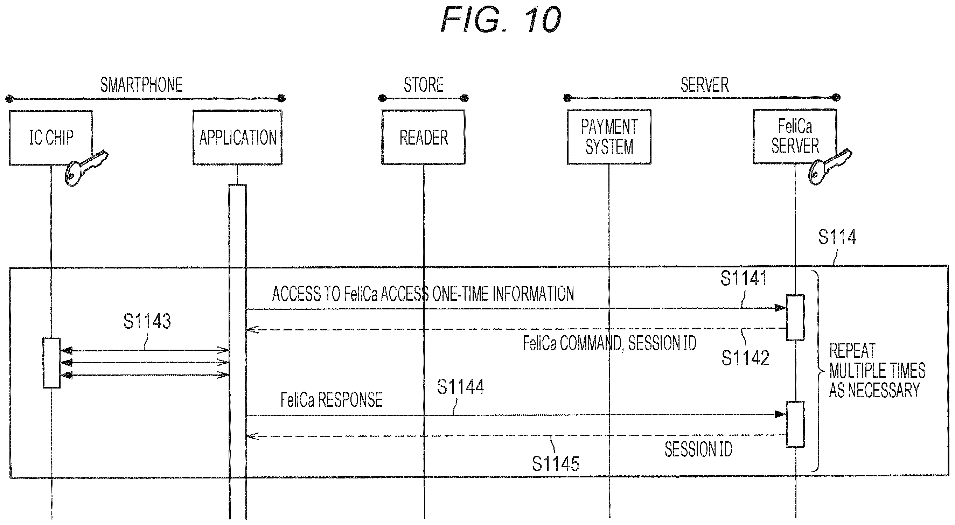

Subsequently, an authentication sequence is executed between the smartphone 10 and the FeliCa server (S114). While the authentication sequence is being executed, a standby screen may be displayed on the smartphone 10 (T12). Details of the authentication sequence (S114) are illustrated in Fig. 10. Note that the authentication sequence (S114) illustrated in Fig. 10 is merely an example of a method of executing the authentication sequence.

As illustrated in Fig. 10, in the authentication sequence (S114), the application (control unit 120) of the smartphone 10 accesses the FeliCa access one-time information generated by the FeliCa server (S1141). Upon receiving the access to the FeliCa access one-time information, the FeliCa server acquires identification information (first identification information) specifying the IC chip from the IC chip 160. Then, the FeliCa server issues a session ID and provides a FeliCa command (read request) and the session ID to the application (control unit 120) (S1142). At this time, the FeliCa server stores the identification information (first identification information) specifying the IC chip acquired from the IC chip 160 and the session ID in association with each other.

In the smartphone 10, upon receiving the FeliCa command and the session ID via the communication unit 140, the application (control unit 120) acquires the balance corresponding to the service identification information selected from the IC chip 160 (S1113) . Then, the application (control unit 120) provides a FeliCa response including the balance to the FeliCa server via the communication unit 140 (S1144). Upon receiving the FeliCa response, the FeliCa server returns the session ID to the application (control unit 120) (S1145).

In the execution of S112 to S114, confidential information (for example, a key) is used (the FeliCa server acquires the identification information (first identification information) specifying the IC chip and the balance of the IC chip 160 by authentication processing using the confidential information (for example, a key)). More specifically, S112 to S114 are securely performed by mutual authentication using confidential information (for example, a key) held by the IC chip 160 and confidential information (for example, a key) held by the FeliCa server. As a result, the identification information (first identification information) specifying the IC chip of the IC chip 160 is more reliably acquired by the FeliCa server. Note that the authentication sequence S114 may be repeatedly executed multiple times as necessary.

Here, a case is assumed where the control unit 120 provides the identification information (first identification information) specifying the IC chip and the balance to the FeliCa server via the communication unit 140 with selection of the service identification information by the user as a trigger. However, as will be described later, the trigger for providing the FeliCa server with the identification information (first identification information) specifying the IC chip and the balance is not limited to such an example.

Returning to Fig. 7, the description will be continued. When the authentication sequence S114 ends, the application (control unit 120) provides the session ID to the payment system via the communication unit 140 (S115). Upon receiving the session ID, the payment system generates one-time information on the basis of identification information (first identification information) specifying the IC chip corresponding to the session ID (S116). Then, the payment system generates a two-dimensional barcode on the basis of the one-time information (S117). Note that the two-dimensional barcode may be generated by a system other than the payment system. For example, the smartphone 10 or the reader 20 may receive the one-time information from the payment system and generate the two-dimensional barcode on the basis of the one-time information.

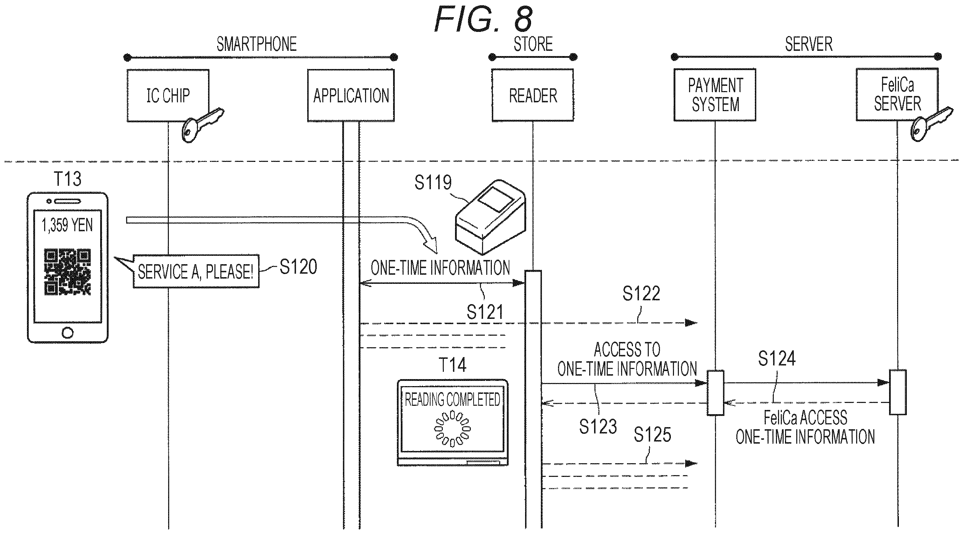

The payment system returns the generated two-dimensional barcode to the application (control unit 120) (S118). Subsequently, as illustrated in Fig. 8, the application (control unit 120) displays the balance (in Fig. 8, 1353 yen) and displays the two-dimensional barcode (T13). When the user tells the payment by the application (in Fig. 8, a service A) (S120), the reader 20 in the store reads the one-time information (two-dimensional barcode) displayed by the application (S121).

Here, a case is assumed where the payment amount of the product is determined in advance. The application (control unit 120) periodically inquires of the payment system whether the generation of the FeliCa access one-time information is completed until the FeliCa server generates the FeliCa access one-time information (access information) necessary for accessing the IC chip 160 (S122). For example, it is assumed that several seconds are required until the generation of the FeliCa access one-time information is completed.

On the other hand, the reader 20 in the store accesses the read one-time information (S123, S124). Upon receiving access to the one-time information, the FeliCa server starts generating the FeliCa access one-time information on the basis of the one-time information. In a case where the generation of the FeliCa access one-time information is completed, the FeliCa server returns the FeliCa access one-time information to the reader 20 via the payment system (S124). In the reader 20, the fact that the barcode has been read is displayed with reading of the barcode as a trigger (T14).

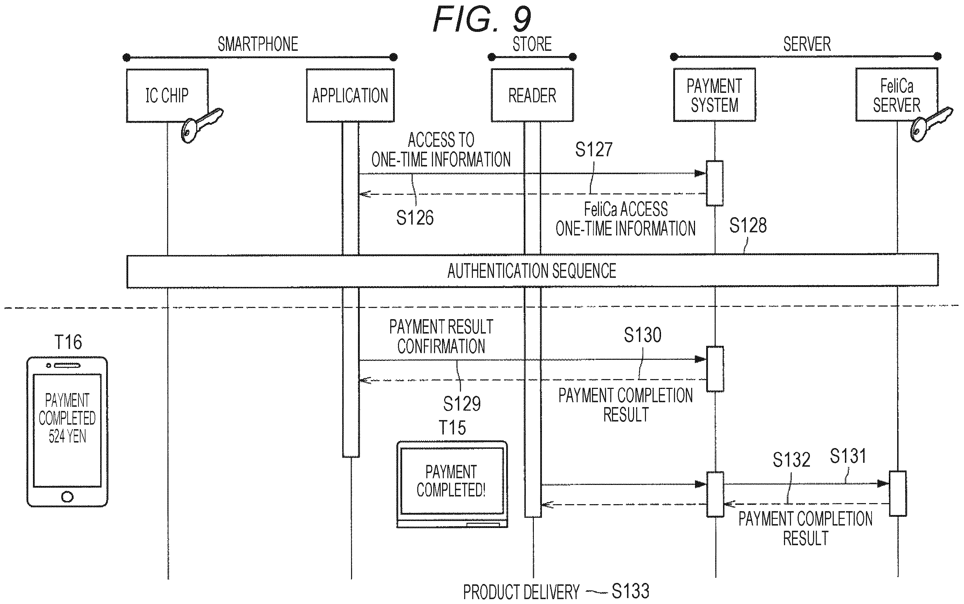

The reader 20 periodically inquires of the payment system whether the payment is completed until the payment is completed by the FeliCa server (S125). For example, it is assumed that several seconds are required until the payment is completed by the FeliCa server. As illustrated in Fig. 9, the application (control unit 120) periodically makes an inquiry until the FeliCa access one-time information (access information) is generated by the FeliCa server (S126), and in a case where the generation of the FeliCa access one-time information is completed by the FeliCa server, the payment system returns the FeliCa access one-time information to the application (control unit 120) (S127).

Note that, in the example illustrated in Fig. 9, the one-time information used to acquire the FeliCa access one-time information in S126 is common to the one-time information read by the reader 20 in S121. However, the one-time information used to acquire the FeliCa access one-time information in S126 and the one-time information read by the reader in S121 may be separately paid out.

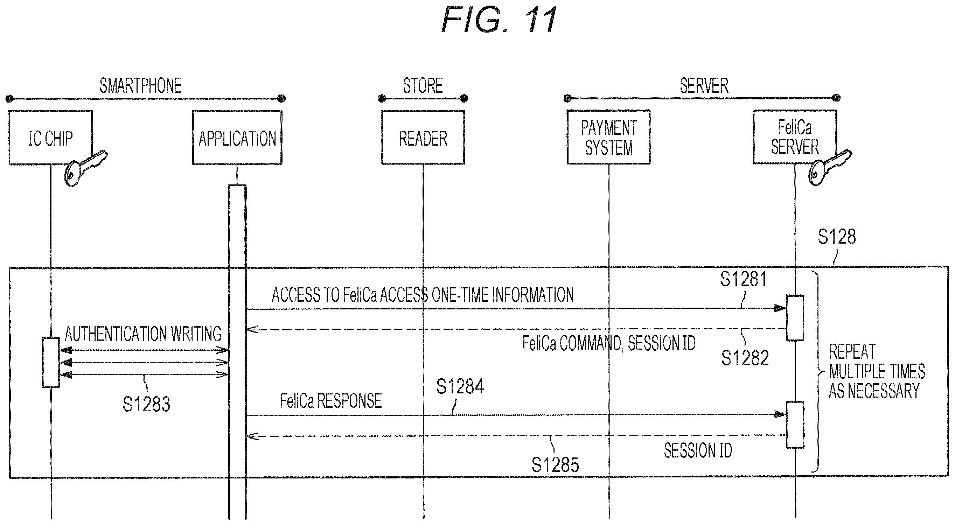

Subsequently, an authentication sequence is executed between the smartphone 10 and the FeliCa server (S128). Details of the authentication sequence (S128) are illustrated in Fig. 11. As illustrated in Fig. 11, in the authentication sequence (S128), the application (control unit 120) of the smartphone 10 accesses the FeliCa access one-time information generated by the FeliCa server (S1281). Upon receiving the access to the FeliCa access one-time information, the FeliCa server acquires identification information (second identification information) specifying the IC chip from the IC chip 160. Then, the FeliCa server compares the identification information (second identification information) specifying the IC chip with the identification information (first identification information) specifying the IC chip acquired in S114 (Fig. 10).

In a case where the identification information (first identification information) specifying the IC chip matches the identification information (second identification information) specifying the IC chip, the FeliCa server provides the application (control unit 120) with the FeliCa command (writing request) and the issued session ID (S1282) . On the other hand, in a case where the identification information (first identification information) specifying the IC chip does not match the identification information (second identification information) specifying the IC chip, the FeliCa server does not provide the FeliCa command (writing request) (writing to the IC chip 160 is not performed). As a result, it is possible to prevent the payment information of the valid user from being illegally used by the third party.

In the smartphone 10, upon receiving the FeliCa command and the session ID via the communication unit 140, the application (control unit 120) acquires the balance corresponding to the service identification information selected from the IC chip 160 (S1283) . Then, the application (control unit 120) performs calculation of subtracting the payment amount designated by the FeliCa command from the balance. Then, the application (control unit 120) writes the calculation result in the balance (corresponding to the selected service identification information) of the IC chip 160 (S1283). The balance is updated by writing the calculation result.

Then, the application (control unit 120) provides a FeliCa response including the updated balance to the FeliCa server via the communication unit 140 (S1284). Upon receiving the FeliCa response, the FeliCa server returns the session ID to the application (control unit 120) (S1285).

In the execution of S126 to S128, confidential information (for example, a key) is used (the FeliCa server acquires the identification information (second identification information) specifying the IC chip and the balance of the IC chip 160 by authentication processing using the confidential information (for example, a key)). More specifically, S126 to S128 are securely performed by mutual authentication using confidential information (for example, a key) held by the IC chip 160 and confidential information (for example, a key) held by the FeliCa server. As a result, the identification information (second identification information) specifying the IC chip of the IC chip 160 is more reliably acquired by the FeliCa server. Note that the authentication sequence S128 may be repeatedly executed multiple times as necessary.

Returning to Fig. 9, the description will be continued. When the authentication sequence S128 ends, the application (control unit 120) provides a payment result confirmation to the payment system via the communication unit 140 (S129). Upon detecting that the writing to the IC chip 160 has been ended by receiving the payment result confirmation, the payment system provides a payment completion result to the application (control unit 120) (S130). Upon receiving the payment completion result via the communication unit 140, the application (control unit 120) displays the fact that the payment has been completed and the updated balance (T16).

Meanwhile, the reader 20 provides a payment request to the FeliCa server. Upon receiving the payment request from the reader 20 (S131) and detecting that the writing to the IC chip 160 has been ended, the FeliCa server returns a payment completion result to the reader 20 (S132). Upon receiving the payment completion result, the reader 20 displays the fact that the payment has been completed (T15). Then, in the store, the store clerk delivers the product to the user.

The first example has been described above. In the above description, a case is assumed where the communication method between the smartphone 10 and the server 30 is a pull type. According to such a communication method, since the withdrawal from the IC chip is performed only in a case where the identification information specifying the IC chip used for generating the two-dimensional barcode matches the identification information specifying the IC chip of the smartphone holding the two-dimensional barcode over the reader 20, it is possible to prevent the payment information of the valid user from being illegally used by the third party. However, as described in the second example, the communication method between the smartphone 10 and the server 30 may be a push type (a method of transmitting a request from the server 20 to the smartphone 10).

Moreover, in the above description, a case where the two-dimensional barcode displayed on the smartphone 10 is held over the reader 20 after the user selects a service has been mainly assumed. However, the user may select a service after holding the two-dimensional barcode displayed on the smartphone 10 over the reader 20.

Furthermore, in the first example, since the value exists in the IC chip 160 of the smartphone 10, the value is specified on the basis of the identification information specifying the IC chip of the smartphone 10 on which the two-dimensional barcode is displayed. Therefore, login to the system is not essential. On the other hand, in general two-dimensional barcode payment, login to the system is essential in order to specify the value managed by the server 30. According to the first example, since login is not essential, input of a user ID, a password, and the like is unnecessary as compared with general two-dimensional barcode payment, and thus, it is considered that the labor required for the user is reduced.

Furthermore, according to the first example, since a value for each service exists in the IC chip 160 of the smartphone 10, in the server 30, payment is performed without depending on service selection by the user. Therefore, any service that can be supported by the server 30 can be used (as will be explained later, it is also possible to limit the available services.). Moreover, according to the first example, since the payment is performed without depending on the service selection by the user in the server 30, the user only needs to tell the store clerk the payment by the application without telling the store clerk the desired service.

Moreover, according to the first example, by mutual authentication using confidential information (for example, a key) held by the IC chip 160 and confidential information (for example, a key) held by the FeliCa server, acquisition of identification information specifying the IC chip is securely performed from the IC chip 160 of the smartphone 10. Therefore, it is possible to prevent the third party from illegally acquiring the session ID (by session hijacking) and the third party from illegally using the payment information of the valid user. Moreover, since the acquisition of the identification information specifying the IC chip is securely performed, the two-dimensional barcode is held over the reader 20 by a smartphone different from the smartphone that has provided the identification information specifying the IC chip for generating the two-dimensional barcode, and the payment information of the valid user can be prevented from being illegally used by a third party.

Moreover, according to the first example, writing to the IC chip 160 is performed only in a case where the identification information (first identification information) specifying the IC chip used for generating the two-dimensional barcode matches the identification information (second identification information) specifying the IC chip of the smartphone that has been used for holding the two-dimensional barcode over the reader 20. Therefore, it is possible to prevent the third party from illegally acquiring the session ID (by session hijacking) and the third party from illegally using the payment information of the valid user. Furthermore, therefore, the two-dimensional barcode is held over the reader 20 by a smartphone different from the smartphone that has provided the identification information specifying the IC chip for generating the two-dimensional barcode, and the payment information of the valid user can be prevented from being illegally used by a third party.

### [3.2. Second example]

Next, a second example of detailed functions of the information processing system 1 according to the embodiment of the present disclosure will be described. The second example is an example corresponding to a case where a two-dimensional barcode is displayed by the smartphone 10 and read by the reader 20 of the store and a case where the communication method between the smartphone 10 and the server 30 is a push type.

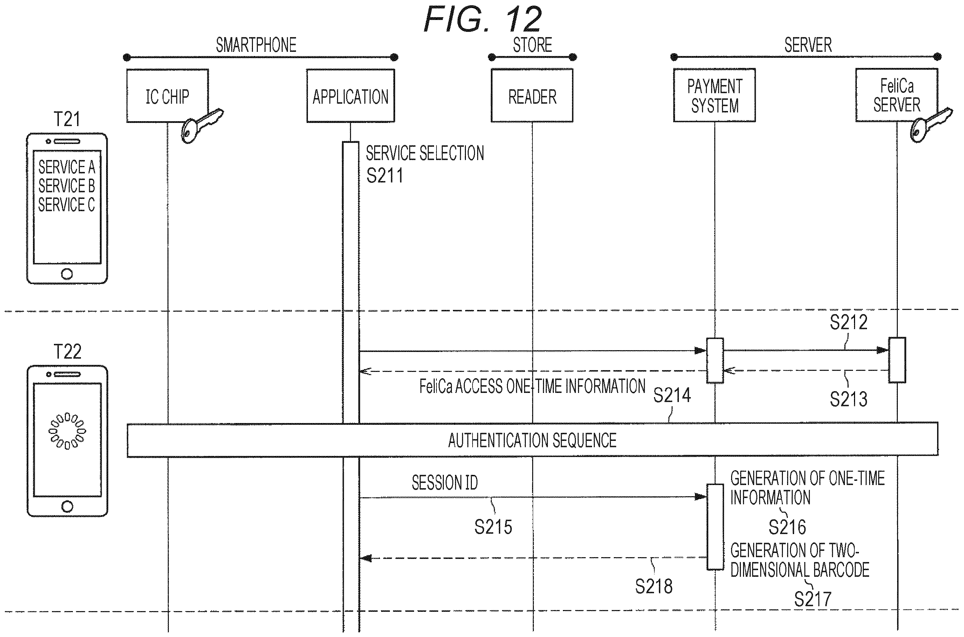

Figs. 12 to 14 are sequence diagrams for explaining the second example of detailed functions of the information processing system 1 according to the embodiment of the present disclosure. Here, also a case is assumed where a user carrying the smartphone 10 visits a store and decides an item to be purchased.

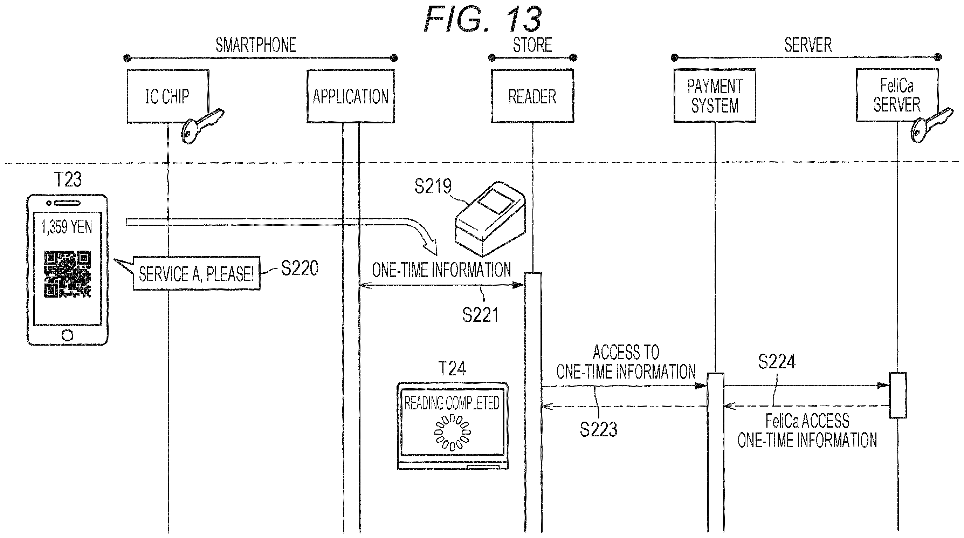

First, S211 to S218 illustrated in Fig. 12 are performed in a similar manner to S111 to S118 (Fig. 7) in the first example. Moreover, S219 to S221, S223, and S224 illustrated in Fig. 13 are performed in a similar manner to S119 to S121, S123, and S124 (Fig. 8) in the first example. However, in the second example, since a case is assumed where the communication method between the smartphone 10 and the server 30 is the push type, similar processes to those in S122 and S125 (Fig. 8) are not performed.

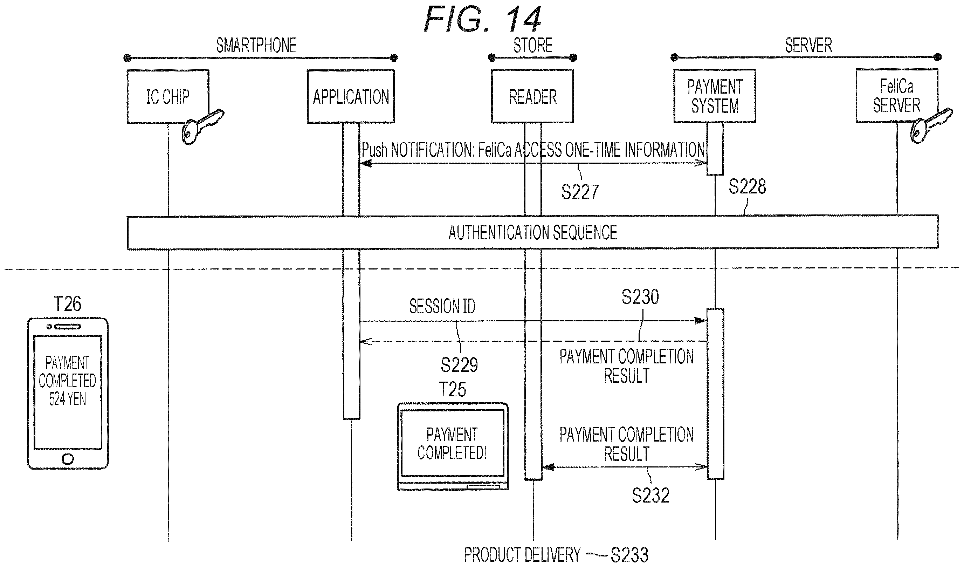

As illustrated in Fig. 14, in a case where the generation of the FeliCa access one-time information is completed by the FeliCa server, the payment system provides the FeliCa access one-time information to the application (control unit 120) by a push notification (S227). Subsequently, an authentication sequence is executed between the smartphone 10 and the FeliCa server (S228) . S228 is performed in a similar manner to S128 (Fig. 9) in the first example. S229 and S230 are also performed in a similar manner to S129 and S130 in the first example.

Upon detecting that the writing to the IC chip 160 has been ended, the payment system provides a payment completion result to the reader 20 by a push notification (S232). Upon receiving the payment completion result, the reader 20 displays the fact that the payment has been completed (T25). Then, in the store, the store clerk delivers the product to the user.

The second example has been described above. The second example can also achieve a similar effect to that of the first example. However, in the second example, since the communication method between the smartphone 10 and the server 30 is the push type, the smartphone used for generating the two-dimensional barcode is notified of the FeliCa access one-time information. Therefore, there is no resistance to illegal copying of the two-dimensional barcode by a third party.

### [3.3. Third example]

Next, a third example of detailed functions of the information processing system 1 according to the embodiment of the present disclosure will be described. The third example is an example corresponding to a case where the two-dimensional barcode is displayed by the reader 20 of the store and read by the reading unit 130 of the smartphone 10 of the user, and the communication method between the smartphone 10 and the server 30 is the pull type.

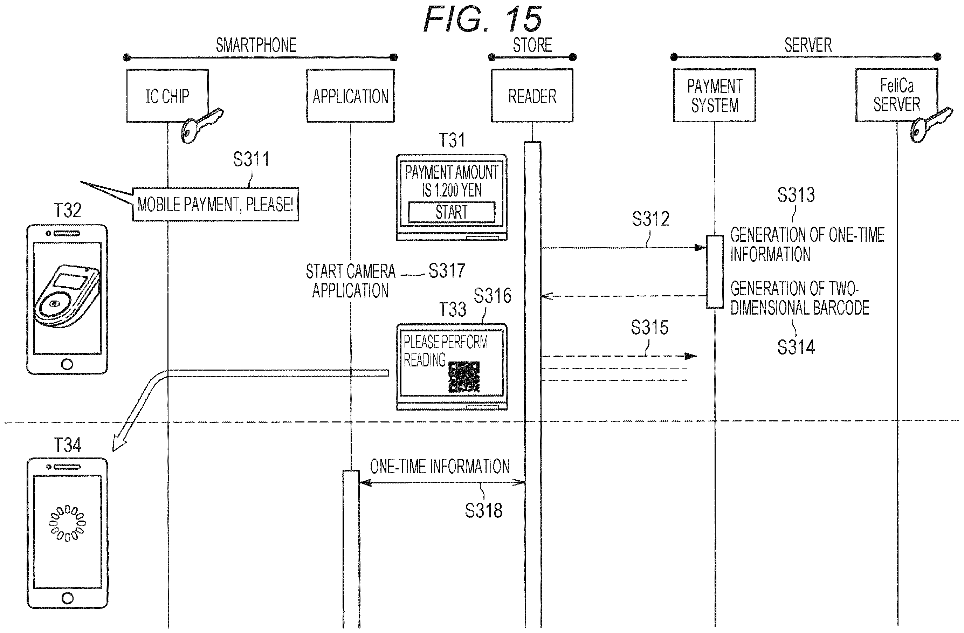

Figs. 15 to 17 are sequence diagrams for explaining the third example of detailed functions of the information processing system 1 according to the embodiment of the present disclosure. Here, also a case is assumed where a user carrying the smartphone 10 visits a store and decides an item to be purchased.

In the smartphone 10, identification information (first identification information) specifying the IC chip is recorded in the IC chip 160, and a balance is recorded for each identification information (service identification information) of a service available by the user. When the user tells the payment by the application (S311), the reader 20 in the store displays the payment amount that has already been determined (T31), and provides an authentication request including the payment amount to the payment system (S312). The control unit 120 starts the camera application on the basis of a start operation by the user (T32, S317).

The payment system generates one-time information on the basis of the payment amount (S313), and stores the one-time information and the payment amount in association with each other. Furthermore, the payment system generates a two-dimensional barcode corresponding to the one-time information (S314). Note that the two-dimensional barcode may be generated by a system other than the payment system. For example, the smartphone 10 or the reader 20 may receive the one-time information from the payment system and generate the two-dimensional barcode on the basis of the one-time information. The payment system returns the two-dimensional barcode to the reader 20. Upon receiving the two-dimensional barcode, the reader 20 displays the two-dimensional barcode (S316, T33). The reader 20 periodically inquires of the payment system whether the payment is completed until the payment is completed by the FeliCa server (S315). For example, it is assumed that several seconds are required until the payment is completed by the FeliCa server.

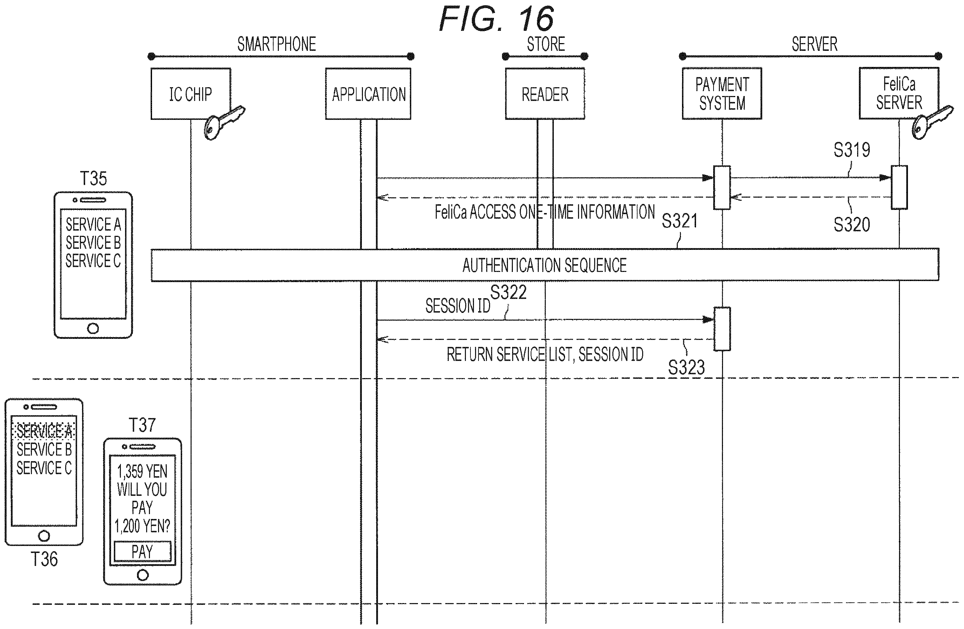

Subsequently, in the smartphone 10, the application (control unit 120) acquires one-time information (two-dimensional barcode) via the reading unit 130 (S318). When the one-time information (two-dimensional barcode) is acquired, a standby screen may be displayed on the smartphone 10 (T34). As illustrated in Fig. 16, the application (control unit 120) provides the authentication request to the server 30 (the payment system and the FeliCa server) via the communication unit 140 (S319) . Upon receiving the authentication request, the FeliCa server generates FeliCa access one-time information and provides the generated FeliCa access one-time information to the application (control unit 120) of the smartphone 10 (S320).

Subsequently, an authentication sequence is executed between the smartphone 10 and the FeliCa server (S321). S321 illustrated in Fig. 16 is performed in a similar manner to S114 in the first example. However, identification information (service identification information) of a service available by the user is provided from the IC chip 160 to the FeliCa server. Furthermore, in S321 illustrated in Fig. 16, the identification information (first identification information) for specifying the IC chip is provided from the IC chip 160 to the FeliCa server, as similar to S114 in the first example. That is, in the third example, with reading of the two-dimensional barcode presented by the reader 20 by the reading unit 130 as a trigger, the identification information (first identification information) for specifying the IC chip by the application (control unit 120) is provided to the FeliCa server.

When the authentication sequence S321 ends, the application (control unit 120) provides the session ID to the payment system via the communication unit 140 (S322). Upon receiving the session ID, the payment system returns a service list corresponding to the service identification information and the session ID to the application (control unit 120) (S323). Upon receiving the service list, the application (control unit 120) displays the service list (T35). Note that, in the displayed service list, all of the service identification information acquired from the IC chip 160 may be displayed, but a service or the like provided by a competitor of the store may be controlled not to be displayed.

The user selects desired service identification information from the service list (T36). When the input unit 110 receives the selection of the service identification information by the user, the application (control unit 120) displays a balance (in Fig. 16, 1359 yen) and a payment amount (in Fig. 16, 1200 yen) corresponding to the selected service identification information (T37). When the user selects payment, the input unit 110 receives the payment. S327 to S331 are performed in a similar manner to S129 to S133 (Fig. 9) in the first example.

The third example has been described above. The third example can also achieve a similar effect to that of the first example. However, in the third example, since the two-dimensional barcode is displayed by the reader 20 instead of the smartphone 10, it does not prevent illegal copying of the two-dimensional barcode by a third party. However, even if the session ID received by the smartphone 10 is hijacked by a third party, since the server 30 performs writing after comparing the identification information specifying the IC chip, resistance to prevent the balance from being withdrawn from other than the smartphone 10 held over the two-dimensional barcode is enhanced.

Moreover, in the above description, a case where the user selects a service after causing the smartphone 10 to read the two-dimensional barcode displayed by the reader 20 has been mainly assumed. However, the user may select a service before causing the smartphone 10 to read the two-dimensional barcode displayed by the reader 20.

Furthermore, in the above description, a case is assumed where the communication method between the smartphone 10 and the server 30 is a pull type. However, the communication method between the smartphone 10 and the server 30 may be a push type.

### [3.4. Fourth example]

Next, a fourth example of detailed functions of the information processing system 1 according to the embodiment of the present disclosure will be described. The fourth example is an example corresponding to a case where the two-dimensional barcode (including the payment amount) affixed to the store is read by the reading unit 130 of the smartphone 10 of the user, and the communication method between the smartphone 10 and the server 30 is the pull type. Note that, in the fourth example, it is assumed that the store clerk has a smartphone, but the store clerk may have another terminal instead of the smartphone. Furthermore, the position where the two-dimensional barcode is affixed is not limited, and the two-dimensional barcode may not be affixed.

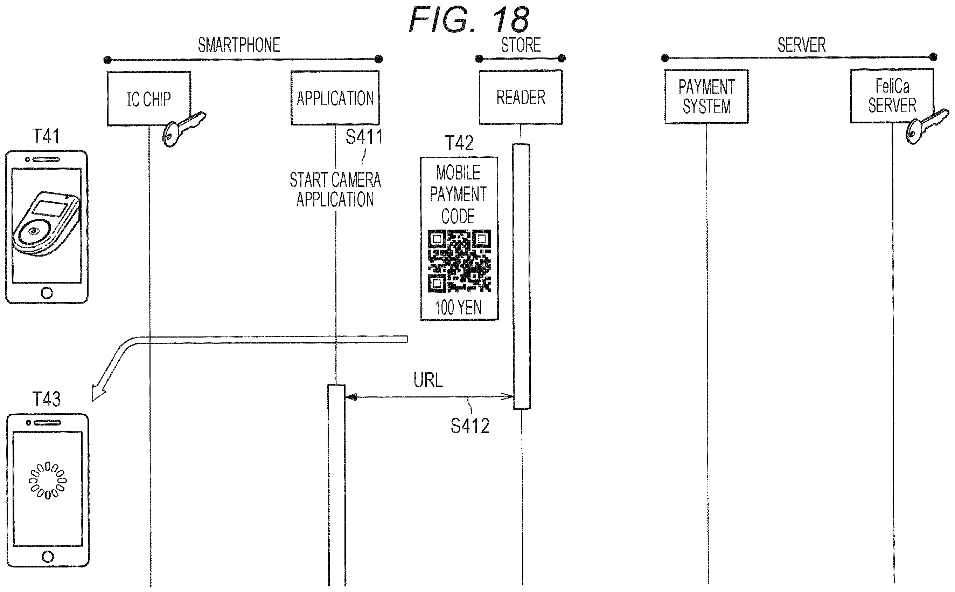

Figs. 18 to 20 are sequence diagrams for explaining the fourth example of detailed functions of the information processing system 1 according to the embodiment of the present disclosure. Here, also a case is assumed where a user carrying the smartphone 10 visits a store and decides an item to be purchased. In addition, a two-dimensional barcode (corresponding to the URL) is affixed to the store (T42). Moreover, a store that receives the payment associated with the URL and the payment amount are registered in the server 30. In this manner, one payment amount is associated with one URL.

In the smartphone 10, identification information (first identification information) specifying the IC chip is recorded in the IC chip 160, and a balance is recorded for each identification information (service identification information) of a service available by the user in association with the identification information (first identification information) specifying the IC chip. The control unit 120 starts the camera application on the basis of a start operation by the user (T41, S411).

Subsequently, in the smartphone 10, the application (control unit 120) acquires URL (two-dimensional barcode) via the reading unit 130 (S412). When the URL (two-dimensional barcode) is acquired, a standby screen may be displayed on the smartphone 10 (T43). At this time, since one payment amount is associated with one URL, the user can also input the number of purchased items on the smartphone 10 (for example, in a store that handles a plurality of products of the same payment amount, or the like).

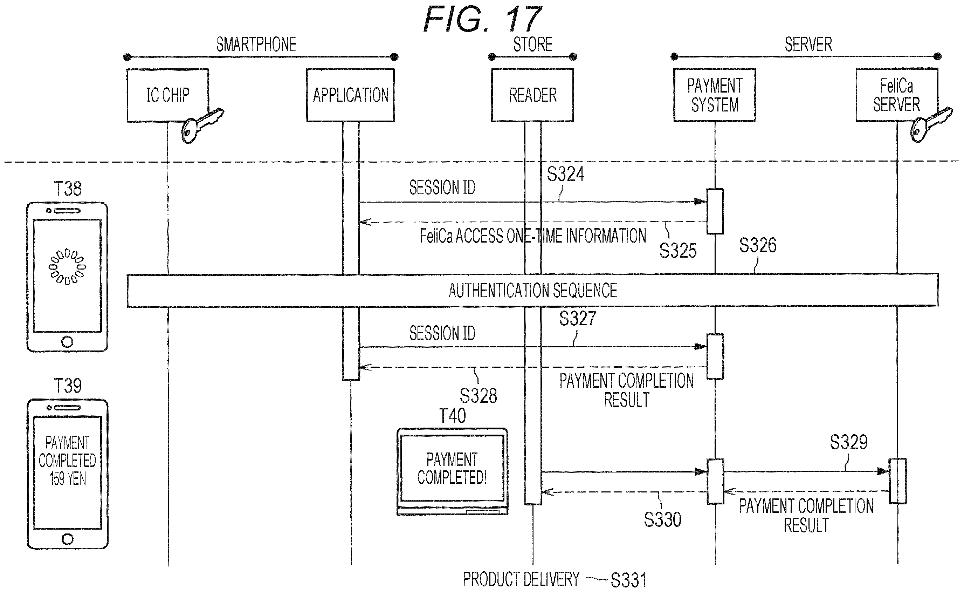

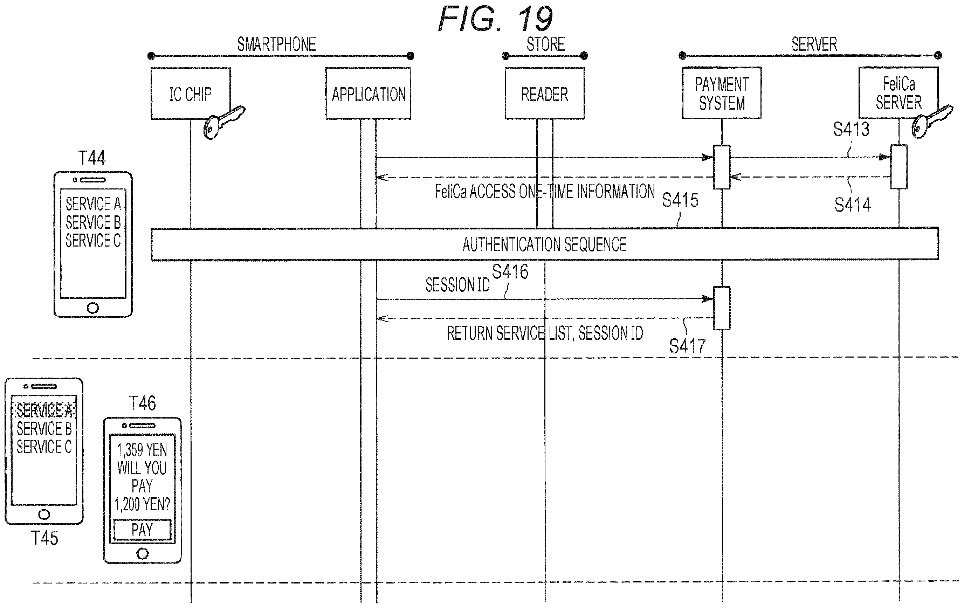

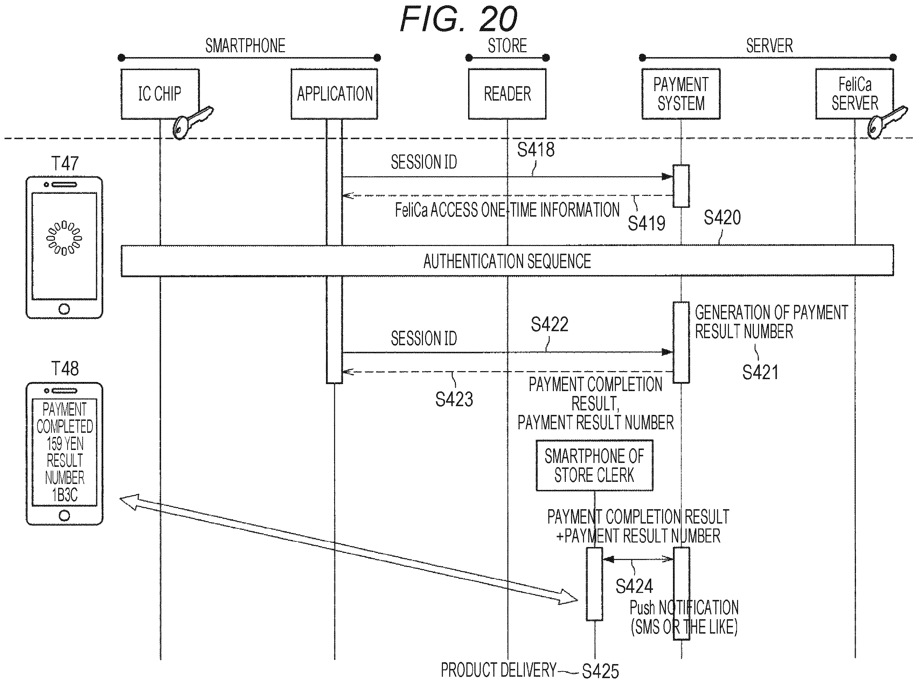

S413 to S420 (Figs. 19 and 20) may be performed in a similar manner to S319 to S326 (Figs. 16 and 17) in the third example. When the authentication sequence S420 ends, the payment system generates a payment result number (S421).

On the other hand, the application (control unit 120) provides the session ID to the payment system via the communication unit 140 (S422). Upon detecting that the writing to the IC chip 160 has been ended by receiving the session ID, the payment system provides a payment completion result and a payment result number to the application (control unit 120) (S423). Upon receiving the payment completion result and the payment result number via the communication unit 140, the application (control unit 120) displays the fact that the payment has been completed, the updated balance, and the payment result number (T48).

Moreover, the payment system provides the payment completion result and the payment result number to the smartphone of the store clerk (by push notification or the like) (S424). Upon receiving the payment completion result and the payment result number, the smartphone of the store clerk displays the fact that the payment has been completed and the payment result number. Then, after the store clerk confirms that the payment result number displayed by the smartphone 10 of the user matches the payment result number displayed by the own smartphone, the store clerk delivers the product to the user (S425).

The fourth example has been described above. The fourth example can also achieve a similar effect to that of the first example.

Moreover, in the above description, a case where the user selects a service after causing the smartphone 10 to read the two-dimensional barcode affixed to the store has been mainly assumed. However, the user may select a service before causing the smartphone 10 to read the two-dimensional barcode affixed to the store.

Furthermore, in the above description, a case is assumed where the communication method between the smartphone 10 and the server 30 is a pull type. However, the communication method between the smartphone 10 and the server 30 may be a push type.

### [3.5. Fifth example]

Next, a fifth example of detailed functions of the information processing system 1 according to the embodiment of the present disclosure will be described. The fifth example is an example corresponding to a case where the two-dimensional barcode (not including the payment amount) affixed to the store is read by the reading unit 130 of the smartphone 10 of the user, and the communication method between the smartphone 10 and the server 30 is the pull type. Note that, also in the fifth example, it is assumed that the store clerk has a smartphone, but the store clerk may have another terminal instead of the smartphone. Furthermore, the position where the two-dimensional barcode is affixed is not limited, and the two-dimensional barcode may not be affixed.

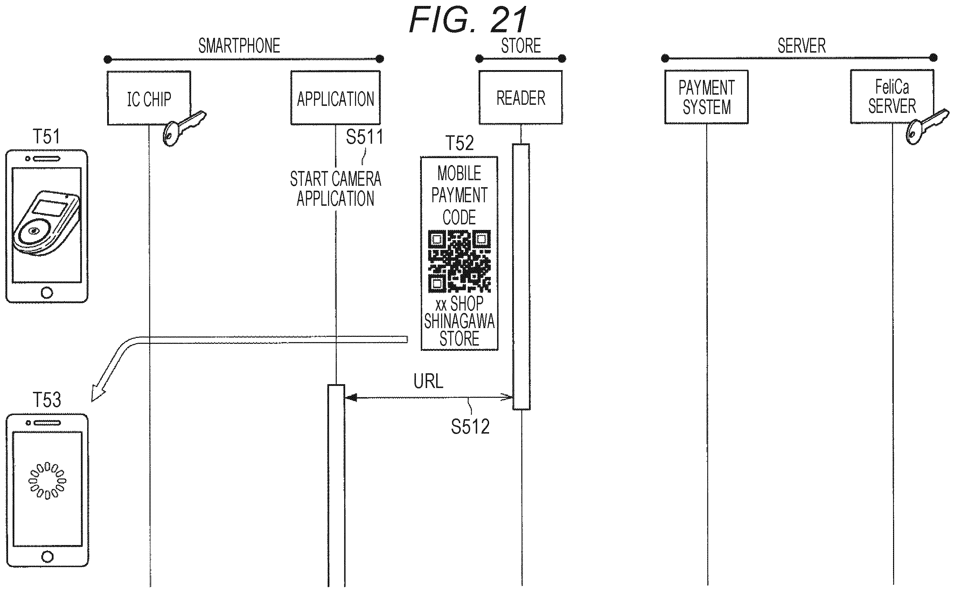

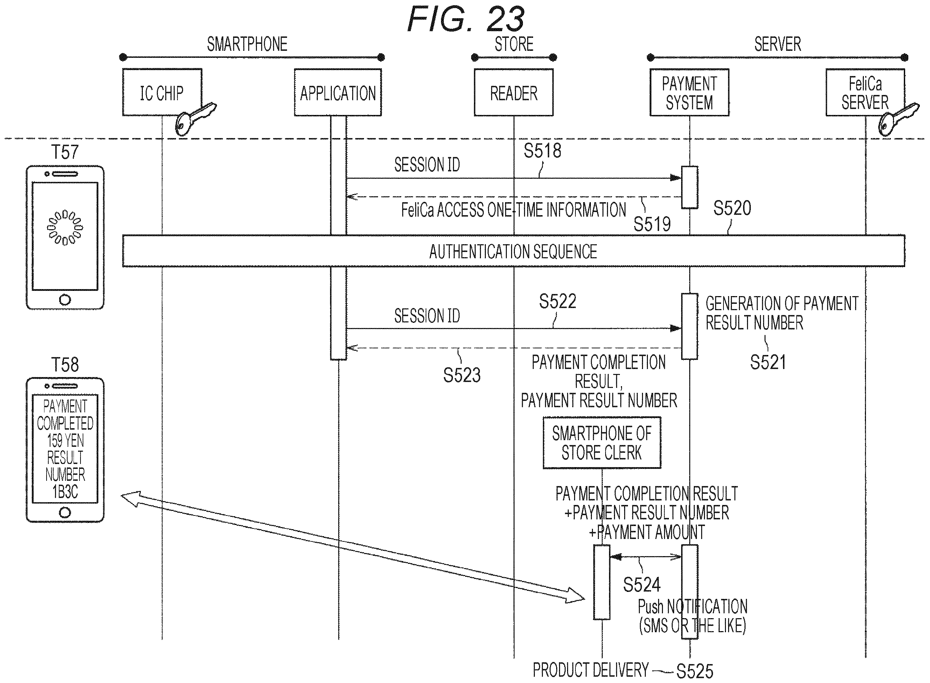

Figs. 21 to 23 are sequence diagrams for explaining the fifth example of detailed functions of the information processing system 1 according to the embodiment of the present disclosure. Here, also a case is assumed where a user carrying the smartphone 10 visits a store and decides an item to be purchased. In addition, a two-dimensional barcode (corresponding to the URL) is affixed to the store (T52). Moreover, a store that receives the payment associated with the URL is registered in the server 30 (the payment amount is not registered).

In the smartphone 10, identification information (first identification information) specifying the IC chip is recorded in the IC chip 160, and a balance is recorded for each identification information (service identification information) of a service available by the user in association with the identification information (first identification information) specifying the IC chip. The control unit 120 starts the camera application on the basis of a start operation by the user (T51, S511).

Subsequently, in the smartphone 10, the application (control unit 120) acquires URL (two-dimensional barcode) via the reading unit 130 (S512). When the URL (two-dimensional barcode) is acquired, a standby screen may be displayed on the smartphone 10 (T53).

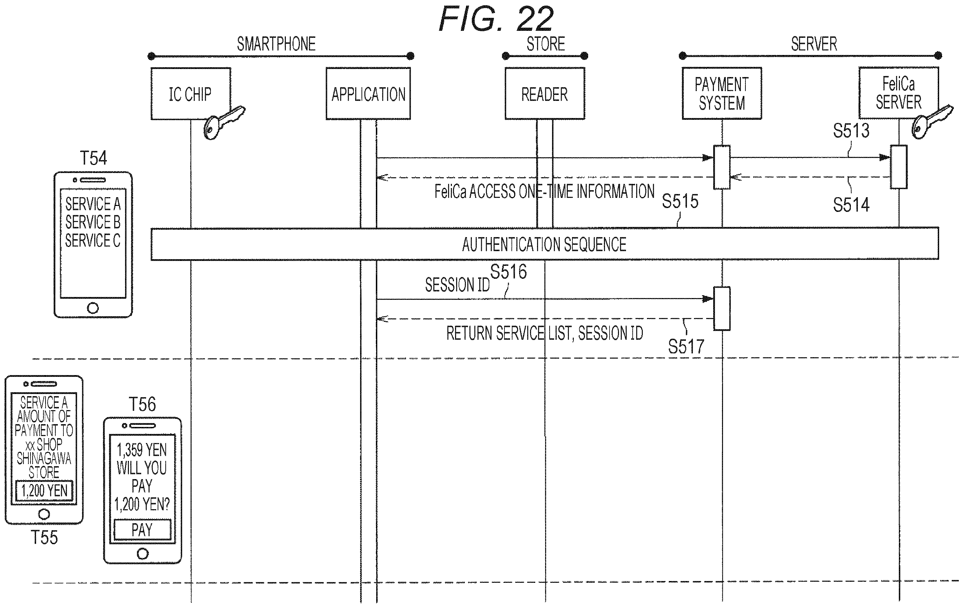

S513 to S517 (Fig. 22) may be performed in a similar manner to S319 to S323 (Fig. 16) in the third example. Upon receiving the service list, the application (control unit 120) displays the service list (T54). Note that, in the displayed service list, all of the service identification information acquired from the IC chip 160 may be displayed, but a service or the like provided by a competitor of the store may be controlled not to be displayed.

The user selects desired service identification information from the service list. When the input unit 110 receives the selection of the service identification information by the user, the application (control unit 120) displays the selected service identification information, the name of the store receiving the payment, the payment amount input field, and the like (T55). When the user inputs the payment amount (in Fig. 22, 1200 yen) in the payment amount input field, the input unit 110 receives the payment amount.

The application (control unit 120) displays a balance (in Fig. 22, 1359 yen) and a payment amount (in Fig. 22, 1200 yen) corresponding to the selected service identification information (T56). When the user selects payment, the input unit 110 receives the payment. S518 to S523 are performed in a similar manner to S418 to S423 (Fig. 20) in the fourth example.

Moreover, the payment system provides the payment completion result and the payment result number and the payment amount to the smartphone of the store clerk (by push notification or the like) (S524). Upon receiving the payment completion result, the payment result number, and the payment amount, the smartphone of the store clerk displays the fact that the payment has been completed, the payment result number, and the payment amount. Then, after the store clerk confirms that the payment result number displayed by the smartphone 10 of the user matches the payment result number displayed by the own smartphone, the store clerk delivers the product to the user (S525).

The fifth example has been described above. The fifth example can also achieve a similar effect to that of the first example.

Moreover, in the above description, a case where the user selects a service after causing the smartphone 10 to read the two-dimensional barcode affixed to the store has been mainly assumed. However, the user may select a service before causing the smartphone 10 to read the two-dimensional barcode affixed to the store.

Furthermore, in the above description, a case is assumed where the communication method between the smartphone 10 and the server 30 is a pull type. However, the communication method between the smartphone 10 and the server 30 may be a push type.

### <4. Conclusion>

As described above, according to the embodiment of the present disclosure, there is provided an information processing apparatus including a control unit that generates a code to be read by a reading device on the basis of identification information of an IC chip of a communication apparatus upon receiving an instruction from the communication apparatus. According to such a configuration, it is possible to easily introduce a system that performs payment for service use.

### <5. Modification>

While preferred embodiments of the present disclosure have been described above in detail with reference to the accompanying drawings, the technical scope of the present disclosure is not limited to such examples. It is obvious that various variations and modifications can be conceived within the scope of the technical idea described in the claims by a person having ordinary knowledge in the field of technology to which the present disclosure belongs, and, of course, it is understood that these variations and modifications belong to the technical scope of present disclosure.

For example, it is also possible to create a program for causing hardware such as a CPU, a ROM, and a RAM built in a computer to exhibit functions equivalent to the functions of the control unit 120 described above. Furthermore, the computer readable recording medium in which the program described above is recorded may be provided.

Furthermore, for example, it is also possible to create a program for causing hardware such as a CPU, a ROM, and a RAM built in a computer to exhibit functions equivalent to the functions of the control unit 220 described above. Furthermore, the computer readable recording medium in which the program described above is recorded may be provided.

Furthermore, for example, it is also possible to create a program for causing hardware such as a CPU, a ROM, and a RAM built in a computer to exhibit functions equivalent to the functions of the control unit 320 described above. Furthermore, the computer readable recording medium in which the program described above is recorded may be provided.

Furthermore, the effects described in the present specification are merely illustrative or exemplary, and are not limitative. That is, the technique according to the present disclosure can exhibit other effects obvious to those skilled in the art from the description of the present specification together with the effects described above or instead of the effects described above.

Note that the following configuration is also within the technical scope of the present disclosure.
(1) An information processing apparatus including
   a control unit that generates a code to be read by a reading device on the basis of identification information of an IC chip of a communication apparatus upon receiving an instruction from the communication apparatus.
(2) The information processing apparatus according to (1) described above,
   in which the control unit acquires the identification information of the IC chip by authentication processing using a key.
(3) The information processing apparatus according to (1) or (2) described above,
   in which, in a case where the code is displayed by the communication apparatus and read by the reading device, the control unit performs control to perform writing to the IC chip on the basis of the code.
(4) The information processing apparatus according to any one of (1) to (3) described above,
   in which, upon detecting that writing to the IC chip has been ended, the control unit notifies the communication apparatus of payment completion.
(5) The information processing apparatus according to any one of (1) to (4) described above,
   in which, in a case where generation of the access information necessary for access to the IC chip is completed on the basis of the code, the control unit notifies that the generation of the access information is completed.
(6) An information processing method including acquiring identification information of an IC chip of a communication apparatus upon receiving an instruction from the communication apparatus, and generating a code to be read by a reading device on the basis of the identification information.
(7) A program for causing a computer to function as an information processing apparatus including
   a control unit that acquires identification information of an IC chip of a communication apparatus upon receiving an instruction from the communication apparatus, and generates a code to be read by a reading device on the basis of the identification information.
(8) A communication apparatus including
   a control unit that provides first identification information of an IC chip to an information processing apparatus,
   in which in a case where a writing request to the IC chip is transmitted from the information processing apparatus, writing to the IC chip is not performed in a case where second identification information acquired from the IC chip does not match the first identification information.
(9) The communication apparatus according to (8) described above,
   in which, in a case where the second identification information matches the first identification information, writing to the IC chip is performed.
(10) The communication apparatus according to (8) or (9) described above,
   in which the control unit performs control to present one or a plurality of pieces of service identification information corresponding to the first identification information, and performs writing corresponding to the service identification information selected by the user.
(11) The communication apparatus according to (10) described above,
   in which the control unit provides the first identification information to the information processing apparatus with selection of the service identification information by the user as a trigger.
(12) The communication apparatus according to any one of (8) to (10) described above,
   in which the control unit provides the first identification information to the information processing apparatus with reading of the code that has been presented as a trigger.
(13) The communication apparatus according to any one of (8) to (12) described above,
   in which the control unit periodically inquires of the information processing apparatus whether generation of access information is completed until the access information necessary for access to the IC chip is generated.
(14) A communication method including:
   providing first identification information of an IC chip to an information processing apparatus; and
   not performing writing to the IC chip in a case where second identification information designated by a writing request to the IC chip transmitted from the information processing apparatus does not match the first identification information.
(15) A program for causing a computer to function as a communication apparatus including
   a control unit that provides first identification information of an IC chip to an information processing apparatus,
   in which, in the control unit, writing to the IC chip is not performed in a case where second identification information designated by a writing request to the IC chip transmitted from the information processing apparatus does not match the first identification information.
(16) An information processing system including a communication apparatus and an information processing apparatus,
   the communication apparatus including a first control unit that provides first identification information of an IC chip to the information processing apparatus,
   the information processing apparatus including a second control unit that acquires the first identification information and generates a code to be read by a reading device on the basis of the first identification information.
(17) The information processing system according to (16) described above, in which the second control unit acquires the first identification information by authentication processing using a key.
(18) The information processing system according to (16) or (17) described above,
   in which, in a case where the code is displayed by the communication apparatus and read by the reading device, the second control unit performs control to perform writing to the IC chip on the basis of the code.
(19) An information processing system according to any one of (16) to (18) described above,
   in which the second control unit performs control not to perform writing to the IC chip in a case where second identification information designated by a writing request to the IC chip transmitted from the information processing apparatus does not match the first identification information.
(20) The information processing system according to (19) described above,
   in which, in a case where the second identification information matches the first identification information, the second control unit performs control not to perform writing to the IC chip.

### REFERENCE SIGNS LIST

- 1: Information processing system
- 10: Smartphone
- 110: Input unit
- 120: Control unit
- 130: Reading unit
- 140: Communication unit
- 150: Storage unit
- 160: IC chip
- 170: Output unit
- 20: Reader
- 220: Control unit
- 230: Reading unit
- 240: Communication unit
- 270: Output unit
- 30: Server
- 320: Control unit
- 330: Storage unit
- 340: Communication unit
- 50: Network

## Claims

1. An information processing apparatus comprising
a control unit that generates a code to be read by a reading device on a basis of identification information of an IC chip of a communication apparatus upon receiving an instruction from the communication apparatus.

2. The information processing apparatus according to claim 1,
wherein the control unit acquires the identification information of the IC chip by authentication processing using a key.

3. The information processing apparatus according to claim 1,
wherein, in a case where the code is displayed by the communication apparatus and read by the reading device, the control unit performs control to perform writing to the IC chip on a basis of the code.

4. The information processing apparatus according to claim 1,
wherein, upon detecting that writing to the IC chip has been ended, the control unit notifies the communication apparatus of payment completion.

5. The information processing apparatus according to claim 1,
wherein, in a case where generation of access information necessary for access to the IC chip is completed on a basis of the code, the control unit notifies that the generation of the access information is completed.

6. An information processing method comprising
acquiring identification information of an IC chip of a communication apparatus upon receiving an instruction from the communication apparatus, and generating a code to be read by a reading device on a basis of the identification information.

7. A program for causing a computer to function as an information processing apparatus including
a control unit that acquires identification information of an IC chip of a communication apparatus upon receiving an instruction from the communication apparatus, and generates a code to be read by a reading device on a basis of the identification information.

8. A communication apparatus comprising
a control unit that provides first identification information of an IC chip to an information processing apparatus,
wherein, in a case where a writing request to the IC chip is transmitted from the information processing apparatus, writing to the IC chip is not performed in a case where second identification information acquired from the IC chip does not match the first identification information.

9. The communication apparatus according to claim 8,
wherein, in a case where the second identification information matches the first identification information, writing to the IC chip is performed.

10. The communication apparatus according to claim 8,
wherein the control unit performs control to present one or a plurality of pieces of service identification information corresponding to the first identification information, and performs writing corresponding to the service identification information selected by a user.

11. The communication apparatus according to claim 10,
wherein the control unit provides the first identification information to the information processing apparatus with selection of the service identification information by the user as a trigger.

12. The communication apparatus according to claim 8,
wherein the control unit provides the first identification information to the information processing apparatus with reading of the code that has been presented as a trigger.

13. The communication apparatus according to claim 8,
wherein the control unit periodically inquires of the information processing apparatus whether generation of access information is completed until the access information necessary for access to the IC chip is generated.

14. A communication method comprising:
providing first identification information of an IC chip to an information processing apparatus; and
not performing writing to the IC chip in a case where second identification information designated by a writing request to the IC chip transmitted from the information processing apparatus does not match the first identification information.

15. A program for causing a computer to function as a communication apparatus including
a control unit that provides first identification information of an IC chip to an information processing apparatus,
wherein the control unit does not perform writing to the IC chip in a case where second identification information designated by a writing request to the IC chip transmitted from the information processing apparatus does not match the first identification information.

16. An information processing system comprising a communication apparatus and an information processing apparatus,
the communication apparatus including a first control unit that provides first identification information of an IC chip to the information processing apparatus,
the information processing apparatus including a second control unit that acquires the first identification information and generates a code to be read by a reading device on a basis of the first identification information.

17. The information processing system according to claim 16,
wherein the second control unit acquires the first identification information by authentication processing using a key.

18. The information processing system according to claim 16,
wherein, in a case where the code is displayed by the communication apparatus and read by the reading device, the second control unit performs control to perform writing to the IC chip on a basis of the code.

19. The information processing system according to claim 16,
wherein the second control unit performs control not to perform writing to the IC chip in a case where second identification information designated by a writing request to the IC chip transmitted from the information processing apparatus does not match the first identification information.

20. The information processing system according to claim 19,
wherein, in a case where the second identification information matches the first identification information, the second control unit performs control not to perform writing to the IC chip.
